# EUROPEAN PATENT SPECIFICATION

(11) **EP 2 942 706 B1**
(45) Date of publication and mention of the grant of the patent: **24.06.2020**
(21) Application number: 13867067.4
(22) Date of filing: 18.12.2013
(51) Int. Cl.: G06F 3/12, B41J 29/38, G06Q 30/06, G07G 1/06, G06K 15/02

(54) **DATA CONVERSION SYSTEM, DATA CONVERSION DEVICE, AND DATA CONVERSION METHOD**
SYSTEM ZUR DATENKONVERSION, DATENKONVERTIERUNGSVORRICHTUNG UND VERFAHREN ZUR DATENKONVERTIERUNG
SYSTÈME, DISPOSITIF ET PROCÉDÉ DE CONVERSION DE DONNÉES

(30) Priority: 28.12.2012 JP 2012286813
(43) Date of publication of application: 11.11.2015
(73) Proprietor: Seiko Epson Corporation, Shinjuku-ku Tokyo 163-0811 (JP)
(72) Inventor: NISHIZAWA, Koji, Suwa-shi Nagano 392-8502 (JP)
(74) Representative: MERH-IP Matias Erny Reichl Hoffmann Patentanwälte PartG mbB
(86) International application number: PCT/JP2013/007438
(87) International publication number: WO 2014/103251

(56) References cited:
- JP-A- 2002 297 890
- JP-A- 2002 334 294
- JP-A- 2003 108 331
- JP-A- 2005 110 177
- JP-A- 2005 144 994
- JP-A- 2006 080 707
- JP-A- 2012 027 633
- US-A1- 2007 033 444
- US-A1- 2009 244 616

## Description

### Technical Field

The present invention relates to a data conversion system for print data, and relates more particularly to a data conversion system that can easily produce data having a high degree of usability.

### Background

POS (point of sales) systems are widely used in retail stores today. A POS system usually has a POS terminal for payment processing at the point of sale where products are sold, and produces a receipt from a receipt printer in response to a command from the POS terminal during the payment process. Information of the payment process (transaction data) executed at each POS terminal is also sent to a POS server connected through a network, and is used for business performance management, store management, and marketing, for example.

The functions of the POS system are usually rendered by a POS application (program) installed on the POS terminal or POS server, and modifying the POS application is necessary to add functionality or improve functions after the system is deployed.

PTL 1 describes adding a function for adding and printing advertising and sales promotion information to receipts without needing to change the POS application

PTL 2 discloses a print management system including an image processing apparatus and a server that manages a print log of a print document processed by the image processing apparatus. The image processing apparatus includes a designation unit configured to designate a billing code of the print document, and a transfer unit configured to transfer the billing code designated by the designation unit and image data generated from the print document to the server. The server includes a determination unit configured to determine a log level of the print log that stores the print document based on the billing code received from the image processing apparatus.

PTL 3 describes a method and apparatus for providing devices with job history information on image forming jobs are provided, in which job history information corresponding to image forming jobs of the devices are generated. The job history information is transmitted to any device selected from the devices.

### Citation List

### Patent Literature

[PTL 1] JP-A-2006-318158
[PTL 2] US 2009/244616 A1
[PTL 3] US 2007/033444 A1

### Summary of Invention

### Technical Problem

However, modifying the POS application is usually difficult for someone other than the person (company) that installed the POS system, and presents problems such as needing to stop operation of the POS system. Development of technology for adding functionality and improving functions using data in the print commands (print data) output from the POS terminal, that is, the POS application, is therefore desirable.

While the method described in PTL 1 is useful, greater use of the print data is also desirable.

An object of the invention is therefore to provide a data conversion system for print data, and more particularly provide a data conversion system that can easily produce data having a high degree of usability.

### Solution to Problem

To achieve the foregoing object, one aspect of the invention is a data conversion system according to claim 1, second aspect of the invention is a data conversion server according to claim 3, and third aspect of the invention is a data conversion method according to claim 4.

Other objectives and features of the invention will become clear from the embodiment of the invention described below.

### [Brief Description of Drawings]

FIG. 1 illustrates the configuration of an embodiment of a data conversion system applying the invention.
FIG. 2 is a flow chart showing an example of the steps in the data conversion process.
FIG. 3 shows an example of a receipt printed based on the print data.
FIG. 4 shows an example of an XML file generated from the print data of the receipt shown in FIG. 3.

### [Description of Embodiments]

An embodiment of the present invention is described below with reference to the accompanying figures. Note that identical or similar elements are identified by the same reference numerals or reference symbols in the figures.

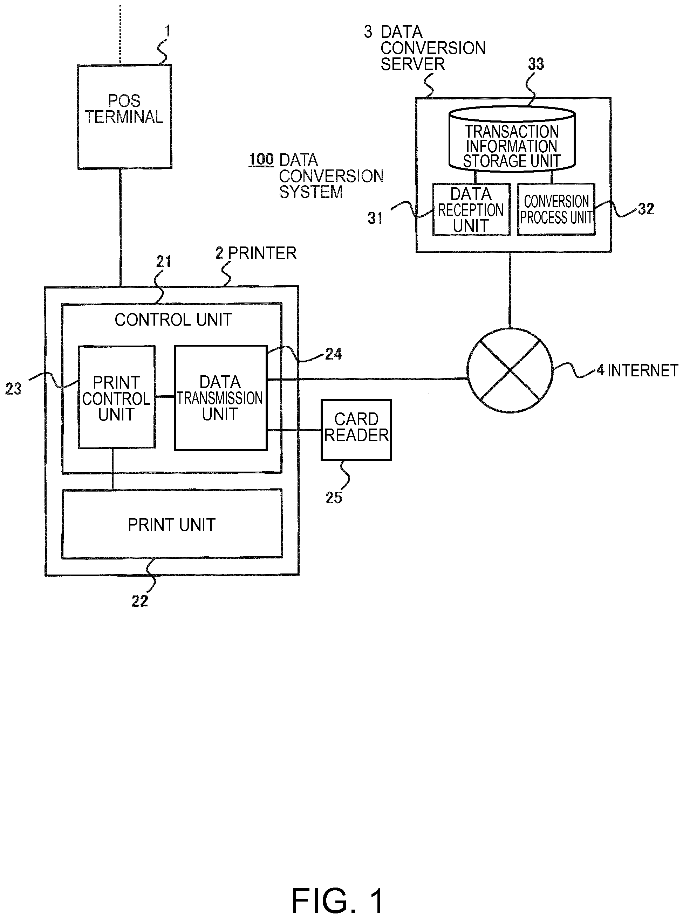

FIG. 1 illustrates the configuration of an embodiment of a data conversion system applying the invention. The data conversion system 100 shown in FIG. 1 is a system according to this embodiment, and includes a printer 2 and a data conversion server 3 (data conversion device) connected through the Internet 4. In the data conversion system 100, the printer 2 passes print data sent from a POS terminal 1 (host device) to the data conversion server 3, and based on the print data, the data conversion server 3 generates data with tags (data with attributes) to which attribute information is added and stores the generated data so it can be used. As a result, an environment that can provide receipt information and other transaction data output from the POS system as data that can be easily used for secondary applications can be achieved.

As shown in FIG. 1, the data conversion system 100 includes a printer 2, which is a receipt printer for the POS terminal 1 deployed in a store as part of the POS system, for example, and a data conversion server 3 that can communicate with the printer 2 through the Internet 4.

The printer 2 has a functional configuration such as shown in FIG. 1. The control unit 21 is a part that controls operation of the printer 2, and the print unit 22 is a part that executes the actual printing operation according to commands from the control unit 21.

The control unit 21 includes a print control unit 23 and a data transmission unit 24. The print control unit 23 is the part that controls the printing operation, interprets print data sent from the POS terminal 1, and causes the print unit 22 to execute the printing process. The print control unit 23 is the part equivalent to the controller of a typical printer, and includes a CPU, memory, and ASIC, for example.

The data transmission unit 24 is the part that executes a process of sending print data the print control unit 23 received through the Internet 4 to the data conversion server 3. The specific content of the process is described further below. The data transmission unit 24 comprises a program containing the process steps, a CPU that executes processes according to the program, and memory, for example.

Note that the data transmission unit 24 may be integrated to the same board as the print control unit 23, or it may be configured on a separate board than the print control unit 23 inside the printer 2. Further alternatively, the data transmission unit 24 may be configured as an externally connected control device.

The printer 2 also has a card reader 25 as a means of acquiring customer identification information (customer ID). A configuration having a reader/writer for near-field communication (NFC) in addition or alternatively to the card reader 25 is also conceivable.

Next, the print unit 22 is the part that executes the printing process on media according to commands from the print control unit 23, and prints and outputs receipts.

Note that the configuration shown in FIG. 1 has a single printer 2, but multiple printers may be connected to the data conversion server 3.

Next, the data conversion server 3 is embodied by a common server computer, and while not shown in the figure has a CPU, RAM, ROM, hard disk drive, display device, input device, and communication interface. As shown in FIG. 1, the functional configuration includes a data reception unit 31, conversion process unit 32, and transaction information storage unit 33.

The data reception unit 31 is the part that receives and stores print data sent from the printer 2 in the transaction information storage unit 33.

The conversion process unit 32 is the part that infers the content of the transaction information (attribute information) contained in the received print data, and based on the inference converts the print data to tagged data, which is in this embodiment of the invention is an XML (Extensible Markup Language) file. The conversion process unit 32 also generates an image of the print data after being printing as image data (a JPEG file in this embodiment of the invention) . In this example, an output image of the receipt is generated as an image file. Note that the specific content of this process is described further below. The conversion process unit 32 also comprises a program containing the process steps, a CPU that executes processes according to the program, and memory, for example.

The transaction information storage unit 33 is a part that stores data related to the data conversion process, and stores print data received from the printer 2, the tagged data and image data generated by the conversion process unit 32, and rule data (pattern data) used when the conversion process unit 32 executes the conversion process. Note that the transaction information storage unit 33 may be a hard disk drive, for example.

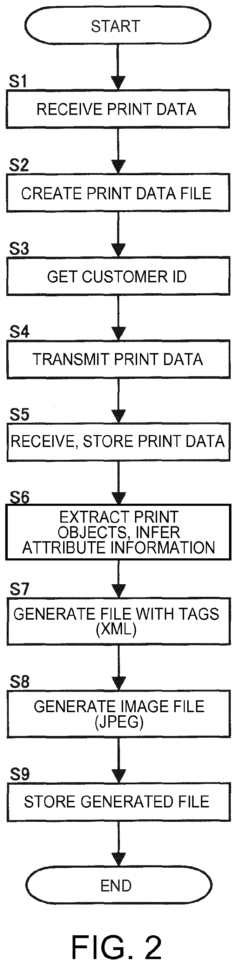

Specific steps in the process executed by the data conversion system 100 in the embodiment of the invention thus comprised are described below. FIG. 2 is a flow chart showing an example of the steps in the data conversion process.

When a product sale or other transaction process is executed by the POS terminal 1, print data for a receipt is first sent from the POS terminal 1 to the printer 2 to produce a receipt to be given to the customer. The transmitted print data is received by the print control unit 23 of the printer 2 (step S1 in FIG. 2). The received print data is sequentially stored in the receive buffer (not shown in the figure).

Note that character data, normal commands, and real-time commands are included in the print data. The character data is data expressing the characters to be printed on the receipt, and is converted to image data for printing. The normal commands are control commands for the printing operation executed by the print unit 22 when printing, and include commands instructing executing print operations and line feed operations, and commands instructing parameter settings such as the line feed distance, for example. While character data and normal commands are sequentially read from the receive buffer and interpreted in the main process after being received, real-time commands are commands that are interpreted and executed simultaneously to being received in the receive buffer. Examples of real-time commands include commands enabling and disabling panel switches on the printer 2, commands instructing selecting the paper, which is the print medium, and commands instructing real-time transmission of printer 2 status information. The real-time commands are read and discarded in the main printing process.

When such print data is stored in the receive buffer, the data transmission unit 24 stores one set of data, that is, the print data for one receipt, as a file (step S2 in FIG. 2). More specifically, a cut command, which is a command instructing cutting the paper, is detected from the received print data, and the data to that command is saved as one data set in a file, for example.

Next, the data transmission unit 24 gets the customer identification information (customer ID) read by the card reader 25 (step S3 in FIG. 2). Note that if the customer ID acquired by the POS terminal 1 is included in the print data, such as when it is contained in barcode information printed on the receipt, acquiring this customer ID may be omitted.

The data transmission unit 24 then adds the acquired customer ID information to the saved print data file, and sends the file with the added information to the data conversion server 3 (step S4 in FIG. 2). In other words, the data transmission unit 24 executes a transmission process of the print data the printer 2 received.

Note that the print control unit 23 and print unit 22 execute a printing process based on the print data received by the printer 2 parallel to this transmission process, and a receipt is produced.

Next, the print data transmitted through the Internet 4 is received by the data reception unit 31 of the data conversion server 3 (step S5 in FIG. 2). The data reception unit 31 stores the received print data in the transaction information storage unit 33.

The conversion process unit 32 then references the rule data (pattern data) stored in the transaction information storage unit 33, extracts the print objects and infers the attribute information from the received and stored print data, and generates a tagged file (XML file) (steps S6 and S7 in FIG. 2). While this specific process is described further below, a print object means individual print content to be printed based on the print data, and in the case of print data for a receipt, the product name, price, and total amount, for example, to be printed on the receipt are examples of print objects.

The rule data (pattern data) is data identifying rules for inferring the content of print objects contained in the print data, and examples of such rules when the print data is for a receipt include: if the print object is the first print object (character data or image data) in the print data, and the print position is center aligned, the print object expresses a logo such as the store name (rule 1); if there are print objects expressing numbers before or after two print objects representing hyphens, the print object is a telephone number; and if there are print objects for a number, characters, and a number on one line, the print object is information for one sold product (rule 2).

If the print pattern (the layout of the print objects) is fixed by the printout, that information can be stored as rule data (pattern data).

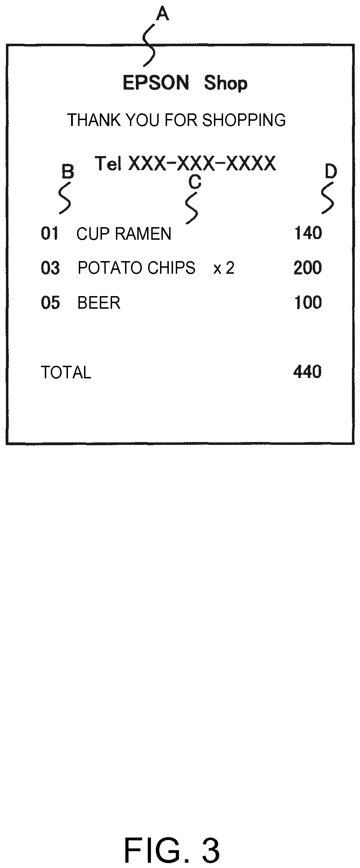

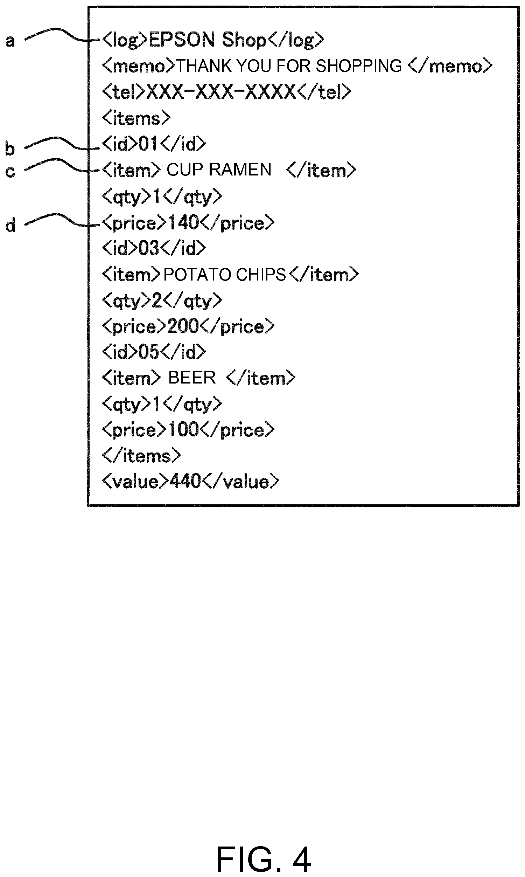

FIG. 3 shows an example of a receipt printed based on the print data. FIG. 4 shows an example of an XML file generated from the print data from the receipt shown in FIG. 3.

In the processes of steps S6 and S7, the conversion process unit 32 first reads the print data stored in the transaction information storage unit 33 sequentially in specific units (such as one line of data) . Next, it interprets the read data. This interpreting process is executed in the same way as the print control unit 23 of the printer 2 interprets commands executed in the printing process. As a result, content indicating what types of print objects are printed where in what format can be acquired.

In the example of a receipt shown in FIG. 3, it is known that the string EPSON Shop (print object) is printed bold and centered on line A. It is also known that on the line indicated by B, C, and D that the characters (print objects) "01", "cup ramen", and "140" are printed left-aligned from specific positions.

Next, the conversion process unit 32 references the rule data stored in the transaction information storage unit 33, infers the content of the print objects contained in the print data, and extracts the attribute information.

In the example of a receipt shown in FIG. 3, because the print object for the string "EPSON Shop" extracted from line A is the print object extracted first from this print data, and the print position is centered, the content of this print object is inferred to be a logo and the content is made the attribute information of the print object, based on the rule data for rule 1 described above. Because number, character, and number print objects are extracted from the line indicated by B, C, D as described above, it is inferred based on the rule data for rule 2 described above that information about one product that was sold is indicated on this line, and the strings "01", "cup ramen", and "140" are inferred to represent the product ID, product name, and price.

The conversion process unit 32 then adds data for the inferred attribute information to the data of the extracted print objects, and generates the data as a file with tags (XML file).

In the example of a receipt shown in FIG. 3, because a print object for the string "EPSON Shop" is extracted from line A, and attribute information identifying this as a logo is extracted, data in an XML format such as shown in FIG. 4(a) is generated. Furthermore, because print objects for the strings "01", "cup ramen", and "140" are extracted from the line indicated by B, C, D as described above, and these are inferred to represent the product ID, product name, and price, data in an XML format such as shown in FIG. 4(b), (c), and (d) is generated.

All print data stored in the transaction information storage unit 33 is thus sequentially processed in the same way as described above, and an XML file containing the print objects included in the print data and attribute information therefor is generated.

If a printing pattern (the content and layout of print objects) is stored as rule data, after identifying the printing pattern of the print data, the printing pattern is referenced to infer the content (attribute information) of the print objects from the order or layout of the extracted print objects. Identifying the printing pattern can be done by previously defining features of the print data for each printing pattern, and comparing the received and stored print data with these features.

Once the XML file is generated, the conversion process unit 32 generates an image file for the received and stored print data (step S8 in FIG. 2). This image file is an image file of the output image of the printout (receipt) output from the printer 2 based on the print data, and is generated as a JPEG file in one example. Because the print objects and print positions thereof are known by the print data interpretation process described above, this image file generating process can be executed based on the results of the print data interpretation process. In this example, a JPEG file expressing an image such as shown in FIG. 3 is generated.

The data conversion server 3 then executes a process of storing the generated tag file (XML file) and image file (JPEG file) in the data conversion server 3 (step S9 in FIG. 2) . Identification information for the print data on which the file was based, and the customer ID sent with the print data from the printer 2, are added when storing the data, enabling referencing the generated file based on the identification information. The date and time the data was received, the date, time, and transaction ID contained as print objects in the receipt, and identification information for the printer 2 from which the data was sent, can be used as print data identification information. When a customer ID is not sent from the printer 2 but a customer ID is contained in barcode information in the print data, the print data of the barcode is interpreted to extract and add the customer ID.

The process of converting print data sent from the POS terminal 1 thus ends.

Because transaction information contained in print data for receipts is stored in a common format as described above, an environment enabling secondary use of the information for various applications can be constructed. For example, the image file can be used to provide the customer with an electronic receipt, advertising to customers related to sold products, adding information and images related to sold products to receipts, and a wide range of other applications.

Note that a data conversion server 3 separate from the printer 2 executes the conversion process after print data transmission in the foregoing embodiment, but the control unit 21 of the printer 2 may execute the conversion process and provide the generated tag file (XML file) and image file (JPEG file) from the printer 2 to a site or device that uses the files.

As described above, in the data conversion system 100 according to this embodiment, because the printer 2 passes print data sent from the POS terminal 1 to a data conversion server 3 that is not in the POS system, and the data conversion server 3 generates tag data from the print data, transaction information acquired by the POS system can be applied in secondary uses without modifying the POS application.

Because data conversion to a format that adds content of the print objects contained in the printout (receipt) as attribute information is applied and the data is stored to enable identifying and referencing transactions and customers, the information can be used for a broad range of secondary applications.

Furthermore, because the system can be configured by replacing or upgrading the receipt printer without changing the existing POS system used in a store, it can be introduced relatively easily and the down time of the POS system can be suppressed.

Furthermore, because the tag data is stored as a common XML file, secondary use thereof is simple.

Yet further, because image data for receipts is also generated, it can be used for electronic receipts, for example.

Furthermore, because a customer ID is added to the generated data, it can also be used for sales promotion activities targeting a specific customer.

The scope of the present invention is not limited to the foregoing embodiment, and includes the invention described in the accompanying claims.

### [Industrial Applicability]

As described above, the invention is useful in a POS system having a printer that prints receipts, and can be applied to servers and data conversion devices used in a POS system.

### [Reference Signs List]

- 1: POS terminal
- 2: printer
- 3: data conversion server
- 4: Internet
- 21: control unit
- 22: print unit
- 23: print control unit
- 24: data transmission unit
- 25: card reader
- 31: data reception unit
- 32: conversion process unit
- 33: transaction information storage unit
- 100: data conversion system

## Claims

1. A data conversion system (100) comprising:
a POS terminal device (1) configured to transmit print data including character data and control commands;
a printer (2) configured to:
• receive and transmit the print data sent by the POS terminal device (1),
• acquire customer identification information,
• add the acquired customer identification information to the print data, and
• transmit the print data to a server (3); and
the server(3) configured to:
• receive the transmitted print data from the printer (2),
• store the received print data in a storage unit (33) of the server (3);
• extract print objects identifying print content to be printed from the print data,
• reference a printing pattern stored as a predefined rule in the storage unit (33), the printing pattern identifying rules for inferring attribute information describing the content of print objects contained in the print data, from the order or layout of print objects,
• infer attribute information of the print objects contained in the print data based on the predefined rule,
• generate a tagged file having the inferred attribute information added to the extracted print objects,
• generate an image file of an output image of a printout from the printer (2) based on the print data, and
• store the tagged file and the image file together with print data identification information and the customer identification information.

2. The data conversion system (100) described in claim 1, wherein
the data with an attribute is expressed in an XML format.

3. A data conversion server (3) comprising:
a reception unit (31) configured to receive print data including customer information from a printer (2);
a storage unit(33) configured to store the received print data and a printing pattern as a predefined rule data;
a data conversion unit (32) configured to:
• extract print objects identifying print content to be printed from the print data,
• reference a printing pattern stored as a predefined rule in the storage unit (33), the printing pattern identifying rules for inferring attribute information describing the content of print objects contained in the print data, from the order or layout of print objects,
• infer attribute information of the print objects contained in the print data based on the predefined rule, and
• generate data tagged file having the inferred attribute information added to the extracted print objects,
• generate an image file of an output image of a printout from the printer (2) based on the print data, and
• store the generated tagged filed and the generated image file with print data identification information and the customer identification in the storage unit (33).

4. A data conversion method, comprising:
receiving print data sent from a POS terminal device (1) by a printer (2);
acquiring customer identification information;
adding the acquired customer identification information to the print data;
transmitting the received print data from the printer (2) to a server (3); and
the server (3):
• receiving the print data transmitted from the printer (2),
• storing the received print data in a storage unit (33),
• extracting print objects identifying print content to be printed from the print data,
• referencing a printing pattern stored as a predefined rule in the storage unit (33), the printing pattern identifying rules for inferring attribute information describing the content of print objects contained in the print data, from the order or layout of print objects,
• inferring attribute information of the print objects contained in the print data based on the predefined rule, and
• generating a tagged file having the inferred attribute information added to the extracted print objects.
• generating an image file of an output image of a printout from the printer (2) based on the print data, and
• storing the tagged file and the image file together with print data identification information and the customer identification information.

## Patentansprüche

1. Datenkonvertierungssystem (100), umfassend:
ein POS-Endgerät (1), das dazu konfiguriert ist, Druckdaten, die Zeichendaten und Steuerbefehle aufweisen, zu übertragen;
einen Drucker (2), der konfiguriert ist zum:
• Empfangen und Übertragen der von dem POS- Endgerät (1) gesendeten Druckdaten,
• Erfassen von Kundenidentifikationsinformationen,
• Hinzufügen der erfassten Kundenidentifikationsinformationen zu den Druckdaten, und
• Übertragen der Druckdaten an einen Server (3); und wobei der Server (3) konfiguriert ist zum:
• Empfangen der übertragenen Druckdaten von dem Drucker (2),
• Speichern der empfangenen Druckdaten in einer Speichereinheit (33) des Servers (3);
• Extrahieren von Druckobjekten, die zu druckenden Druckinhalt identifizieren, aus den Druckdaten,
• Referenzieren eines Druckmusters, das als vordefinierte Regel in der Speichereinheit (33) gespeichert ist, wobei das Druckmuster Regeln zum Ableiten von Attributinformationen, die den Inhalt der in den Druckdaten enthaltenen Druckobjekte beschreiben, aus der Reihenfolge oder dem Layout der Druckobjekte identifiziert,
• Ableiten von Attributinformationen der in den Druckdaten enthaltenen Druckobjekte basierend auf der vordefinierten Regel,
• Erzeugten einer vorschlagworteten Datei, die die zu den extrahierten Druckobjekten hinzugefügten abgeleiteten Attributinformationen aufweist,
• Erzeugen einer Bilddatei eines Ausgabebildes eines Ausdrucks von dem Drucker (2) basierend auf den Druckdaten, und
• Speichern der vorschlagworteten Datei und der Bilddatei zusammen mit den Druckdatenidentifikationsinformationen und den Kundenidentifikationsinformationen.

2. Datenkonvertierungssystem (100), wie in Anspruch 1 beschrieben, wobei
die Daten mit einem Attribut in einem XML-Format ausgedrückt werden.

3. Datenkonvertierungsserver (3), umfassend:
eine Empfangseinheit (31), die dazu konfiguriert ist, Druckdaten, die Kundeninformationen aufweisen, von einem Drucker (2) zu empfangen;
eine Speichereinheit (33), die dazu konfiguriert ist, die empfangenen Druckdaten und ein Druckmuster als vordefinierte Regeldaten zu speichern;
eine Datenkonvertierungseinheit (32), die konfiguriert ist zum:
• Extrahieren von Druckobjekten, die zu druckenden Druckinhalt identifizieren, aus den Druckdaten,
• Referenzieren eines Druckmusters, das als vordefinierte Regel in der Speichereinheit (33) gespeichert ist, wobei das Druckmuster Regeln zum Ableiten von Attributinformationen, die den Inhalt der in den Druckdaten enthaltenen Druckobjekte beschreiben, aus der Reihenfolge oder dem Layout der Druckobjekte identifiziert,
• Ableiten von Attributinformationen der in den Druckdaten enthaltenen Druckobjekte basierend auf der vordefinierten Regel, und
• Erzeugen einer datenvorschlagworteten Datei, die die zu den extrahierten Druckobjekten hinzugefügten abgeleiteten Attributinformationen aufweist,
• Erzeugen einer Bilddatei eines Ausgabebildes eines Ausdrucks von dem Drucker (2) basierend auf den Druckdaten, und
• Speichern der erzeugten vorschlagworteten Datei und der erzeugten Bilddatei mit den Druckdatenidentifikationsinformationen und der Kundenidentifikation in der Speichereinheit (33).

4. Datenkonvertierungsverfahren, umfassend:
Empfangen von Druckdaten, die von einem POS-Endgerät (1) gesendet wurden, durch einen Drucker (2);
Erfassen von Kundenidentifikationsinformationen;
Hinzufügen der erfassten Kundenidentifikationsinformationen zu den Druckdaten;
Übertragen der empfangenen Druckdaten von dem Drucker (2) an einen Server (3); und wobei der Server (3) ist zum:
• Empfangen der von dem Drucker übertragenen Druckdaten (2),
• Speichern der empfangenen Druckdaten in einer Speichereinheit (33),
• Extrahieren von Druckobjekten, die zu druckenden Druckinhalt identifizieren, aus den Druckdaten,
• Referenzieren eines Druckmusters, das als vordefinierte Regel in der Speichereinheit (33) gespeichert ist, wobei das Druckmuster Regeln zum Ableiten von Attributinformationen, die den Inhalt der in den Druckdaten enthaltenen Druckobjekte beschreiben, aus der Reihenfolge oder dem Layout der Druckobjekte identifiziert,
• Ableiten von Attributinformationen der in den Druckdaten enthaltenen Druckobjekte basierend auf der vordefinierten Regel, und
• Erzeugen einer vorschlagworteten Datei, die die zu den extrahierten Druckobjekten hinzugefügten abgeleiteten Attributinformationen aufweist,
• Erzeugen einer Bilddatei eines Ausgabebildes eines Ausdrucks von dem Drucker (2) basierend auf den Druckdaten, und
• Speichern der vorschlagworteten Datei und der Bilddatei zusammen mit den Druckdatenidentifikationsinformationen und den Kundenidentifikations-informationen.

## Revendications

1. Système de conversion de données (100) comprenant :
un dispositif terminal POS (1) configuré pour transmettre des données d'impression incluant des données de caractère et des commandes de contrôle ;
une imprimante (2) configurée pour :
• recevoir et transmettre les données d'impression envoyées par le dispositif terminal POS (1),
• acquérir des informations d'identification de client,
• ajouter les informations d'identification de client acquises aux données d'impression, et
• transmettre les données d'impression à un serveur (3) ; et
le serveur (3) configuré pour :
• recevoir les données d'impression transmises en provenance de l'imprimante (2),
• stocker les données d'impression reçues dans une unité de stockage (33) du serveur (3) ;
• extraire des objets d'impression identifiant un contenu d'impression à imprimer à partir des données d'impression,
• faire référence à un modèle d'impression stocké comme une règle prédéfinie dans l'unité de stockage (33), le modèle d'impression identifiant des règles pour déduire des informations d'attribut décrivant le contenu d'objets d'impression contenus dans les données d'impression, de l'ordre ou de la disposition d'objets d'impression,
• déduire des informations d'attribut des objets d'impression contenus dans les données d'impression sur la base de la règle prédéfinie,
• générer un fichier étiqueté ayant les informations d'attribut déduites ajoutées aux objets d'impression extraits,
• générer un fichier image d'une image de sortie d'une impression en provenance de l'imprimante (2) sur la base des données d'impression, et
• stocker le fichier étiqueté et le fichier image conjointement avec des informations d'identification de données d'impression et les informations d'identification de client.

2. Système de conversion de données (100) selon la revendication 1, dans lequel les données avec un attribut sont exprimées dans un format XML.

3. Serveur de conversion de données (3) comprenant :
une unité de réception (31) configurée pour recevoir des données d'impression incluant des informations de client en provenance d'une imprimante (2) ;
une unité de stockage (33) configurée pour stocker les données d'impression reçues et un modèle d'impression comme une donnée de règle prédéfinie ;
l'unité de conversion de données (32) configurée pour :
• extraire des objets d'impression identifiant un contenu d'impression à imprimer à partir des données d'impression,
• faire référence à un modèle d'impression stocké comme une règle prédéfinie dans l'unité de stockage (33), le modèle d'impression identifiant des règles pour déduire des informations d'attribut décrivant le contenu d'objets d'impression contenus dans les données d'impression, de l'ordre ou de la disposition d'objets d'impression,
• déduire des informations d'attribut des objets d'impression contenus dans les données d'impression sur la base de la règle prédéfinie, et
• générer un fichier étiqueté de données ayant les informations d'attribut déduites ajoutées aux objets d'impression extraits,
• générer un fichier image d'une image de sortie d'une impression en provenance de l'imprimante (2) sur la base des données d'impression, et
• stocker le fichier étiqueté généré et le fichier image généré avec des informations d'identification de données d'impression et l'identification de client dans l'unité de stockage (33).

4. Procédé de conversion de données, comprenant :
la réception de données d'impression envoyées depuis un dispositif terminal POS (1) par une imprimante (2) ;
l'acquisition d'informations d'identification de client ;
l'ajout des informations d'identification de client acquises aux données d'impression ;
la transmission des données d'impression reçues de l'imprimante (2) à un serveur (3) ; et
le serveur (3) :
• recevant les données d'impression transmises depuis l'imprimante (2),
• stockant les données d'impression reçues dans une unité de stockage (33),
• extrayant des objets d'impression identifiant un contenu d'impression à imprimer à partir des données d'impression,
• faisant référence à un modèle d'impression stocké comme une règle prédéfinie dans l'unité de stockage (33), le modèle d'impression identifiant des règles pour déduire des informations d'attribut décrivant le contenu d'objets d'impression contenus dans les données d'impression, de l'ordre ou de la disposition d'objets d'impression,
• déduisant des informations d'attribut des objets d'impression contenus dans les données d'impression sur la base de la règle prédéfinie, et
• générant un fichier étiqueté ayant les informations d'attribut déduites ajoutées aux objets d'impression extraits,
• générant un fichier image d'une image de sortie d'une impression en provenance de l'imprimante (2) sur la base des données d'impression, et
• stockant le fichier étiqueté et le fichier image conjointement avec des informations d'identification de données d'impression et les informations d'identification de client.
